# EUROPÄISCHE PATENTSCHRIFT

(11) **EP 1 435 079 B1**
(45) Veröffentlichungstag und Bekanntmachung des Hinweises auf die Patenterteilung: **23.01.2008**
(21) Anmeldenummer: 02776766.4
(22) Anmeldetag: 01.10.2002
(51) Int. Cl.: G08C 17/02

(54) **Drahtloses Sensorsystem**
Wireless sensor system
Système de détection sans fil

(30) Priorität: 11.10.2001 DE 10150128
(43) Veröffentlichungstag der Anmeldung: 07.07.2004
(73) Patentinhaber: EnOcean GmbH, 82041 Oberhaching (DE)
(72) Erfinder: ALBSMEIER, Andre, 81479 München (DE); BULST, Wolf-Eckhart, 81739 München (DE); PISTOR, Klaus, 83623 Linden (DE); SCHMIDT, Frank, 85604 Pöring (DE); SCZESNY, Oliver, 85609 Aschheim (DE)
(74) Vertreter: Epping - Hermann - Fischer
(86) Internationale Anmeldenummer: PCT/DE2002/003732
(87) Internationale Veröffentlichungsnummer: WO 2003/034366

(56) Entgegenhaltungen:
- EP-A- 0 617 500
- GB-A- 2 047 932
- US-B1- 6 259 372

## Beschreibung

Die Erfindung betrifft ein Sensorsystem, das nicht über Draht angeschlossen wird ("drahtlos"), ein darauf aufbauendes Überwachungssystem sowie zwei Verwendungen des Sensorsystems.

Zu Detektion einer Umgebungsänderung werden bisher hauptsächlich Sensoren verwendet, welche eine Zustandsinformation über Drahtleitungen weiterleiten und über diese gleichzeitig mit Strom versorgt werden. Problematisch ist dabei die oft aufwendige und damit kostenträchtige Verkabelung.

Ebenso sind batteriebetriebene Sensoren bekannt, welche die entsprechenden Messwerte per Funk weiterleiten. Diese haben jedoch den Nachteil, dass die Batterien gewartet werden müssen. Insbesondere bei einer großen Zahl zu überwachender Einrichtungen verursachen die Batterien logistische Probleme bei der Wartung sowie hohe Kosten.

Aus DE 198 26 513 A1 ist ein Automatisierungssystem zur Steuerung einer Bearbeitungsvorrichtung mit einem Funksensor bekannt, das zur Verringerung des Installationsaufwands dient. Dazu weist es einen Funksensor auf, der mit einer Solarzelle, gegebenenfalls in Kombination mit einem Energiespeicher, betreibbar ist.

Aus der US 6,259,372 ist ein Überwachungssystem bekannt, mit zumindest einem Sensorsystem sowie ein Überwachungs- und Auswertesystem. An unterschiedlichen Orten positionierte Sensoren senden dabei mit unterschiedlichen Frequenzen.

Aus der DE 43 09 006 A1 ist eine Vorrichtung zur drahtlosen Datenübermittlung bekannt. Es handelt sich um eine Vorrichtung zur drahtlosen Datenübermittlung mittels Schallwellen, Lichtwellen oder elektromagnetischen Wellen, mit zumindest einem Sender und einem auf den Sender abgestimmten Empfänger. Die Energieversorgung des Senders erfolgt mittels einer Solarzelle. Der Sender selbst weist ein Infrarot-Sendeelement oder eine Sendeantenne und einen Glasbruchmelder auf, so dass sich die Vorrichtung bevorzugt als Einbruchssicherung einsetzen lässt.

Aus der DE 30 16 338 A1 ist ein Überwachungssystem für Reifenzustände eines Fahrzeugs bekannt. Dabei ermittelt ein Messwertumformer einen abnormalen Reifenzustand, erzeugt elektrische Impulse, die auf den ermittelten Zustand hinweisen und eine Einrichtung, die den Zustand in kodierter Form mittels eines hochfrequenten Signals aussendet. Eine Empfangseinrichtung ist zusätzlich vorgesehen, um das Hochfrequenzsignal zu empfangen und aus dem Code den abnormalen Reifendruck erkennt und zur Anzeige bringt.

Es ist die Aufgabe der vorliegenden Erfindung, eine verbesserte Möglichkeit zur stromsparenden Zustandabfrage bereitzustellen, die sich einfach montierbar realisieren lässt.

Diese Aufgabe wird mittels der Maßnahmen der nebengeordneten Ansprüche gelöst. Vorteilhafte Ausgestaltungen sind den Unteransprüchen entnehmbar.

Das Sensorsystem weist mindestens einen Spannungsgenerator zur Umwandlung nichtelektrischer Energie in elektrische Energie auf, z. B. eine Solarzelle, ein induktives Element oder ein Piezoelement. Es ist daher keine Batterie zu seinem Betrieb notwendig. Dem Spannungsgenerator ist mindestens ein Energiespeicher, z. B. ein Akkumulator oder ein Kondensator, nachgeschaltet. An den Energiespeicher ist mindestens ein Spannungswandler angeschlossen, der die gespeicherte Energie in ein zum Betrieb einer Prozessorsteuerung geeignetes Ausgangssignal umwandelt. Beispielsweise könnte der Spannungswandler Spannungsspitzen abschneiden, die die Prozessorsteuerung schädigen. Auch ist mindestens ein Sensor vorhanden, der den gewünschten Zustand detektiert, z. B. ein Lichtstärkesensor, ein Kontaktsensor oder ein Lagesensor. Weiterhin ist mindestens ein Sender zur drahtlosen Aussendung von Sendetelegrammen, insbesondere in Form von Funksignalen, vorhanden. Die Sendetelegramme sind mittels der Prozessorsteuerung erzeugbar; sie enthalten mindestens einen Messwert des mindestens einen Sensors. Es können aber auch mehrere Messwerte, z. B. mehrerer Sensoren, enthalten sein.

Das Sensorsystem beinhaltet auch eine Timerschaltung, die in Abhängigkeit eines Zustandswertes, z. B. eines Spannungsniveaus, des mindestens einen Energiespeichers triggerbar ist und die nach einer von ihr bestimmten Zeitspanne das Sensorsystem zur Aussendung mindestens eines Sendetelegramms aktiviert. Die Zeitspanne kann beispielsweise entweder durch die Konstruktion der Timerschaltung fest vorgegeben sein oder variabel bei jeder Aktivierung durch die Prozessorschaltung neu festgelegt werden. Dazu kann insbesondere der Ladezustand des Energiespeichers abgefragt werden und in die Festlegung der Sendehäufigkeit pro Zeiteinheit einfließen, um möglichst lange Betriebsdauern des Sensors zu ermöglichen. Nach ihrer Aktivierung sollte die Energie typischerweise ausreichend sein, um die laufende Timerschaltung auch bei dann fehlender externer Energiezufuhr, z. B. bei Bewölkung und Nutzung einer Solarzelle, zu betreiben.

Es ist insbesondere vorteilhaft, wenn der Sensor auch als Spannungsgenerator betreibbar ist, weil so die Zahl der Bauelemente, und damit eine Fehleranfälligkeit reduziert wird.

Es ist vorteilhaft, wenn mindestens ein Spannungsgenerator eine Solarzelle ist, weil diese eine ganzjährig arbeitende Energiezufuhr ermöglicht. Die Solarzelle ist insbesondere vorteilhaft bei der Beleuchtungsmessung, weil sie hier als Spannungsgenerator und gleichzeitig als Beleuchtungssensor einsetzbar ist.

Es ist weiterhin vorteilhaft, wenn mindestens ein Spannungsgenerator ein piezoelektrischer und / oder induktiver Wandler ist, weil so eine preiswerte Energiequelle bereitsteht. Insbesondere bei der Positionsbestimmung, z. B. von Türen, Fenstern u. ä. ist es vorteilhaft, wenn dieser Spannungsgenerator gleichzeitig als Sensor zur Positionsbestimmung dient. Es ist zur Herstellung einer langen Betriebsdauer günstig, wenn zusätzlich eine Solarzelle als Spannungsgenerator vorhanden ist.

Zur Erreichung einer langen Zeitspanne und / oder zur Realisierung mehrerer Aktivierungszyklen auch bei geringer oder fehlender Energiezufuhr ist es vorteilhaft, wenn die Timerschaltung mit Halbleiterbausteinen in ULP("Ultra Low Power")-Technik aufgebaut ist.

Es ist zur Identifizierung des Sensors, insbesondere beim gleichzeitigen Einsatz mehrerer Sensoren und/oder Sensorsysteme, vorteilhaft, wenn das Sendetelegramm zusätzlich mindestens einen Identcode enthält.

Weiterhin wird die Aufgabe durch ein Überwachungssystem gelöst, das mindestens ein Sensorsystem wie oben beschrieben sowie mindestens ein Empfangs- und Auswertesystem enthält. Typischerweise gibt das Sensorsystem mittels des Sendetelegramms Informationen drahtlos, z. B. über Funk, an ein stromnetzgebundenes Empfangs- und Auswertesystem weiter. Das Empfangs- und Auswertesystem ist z. B. eine Beleuchtungssteuerung, oder es enthält Anzeigeelemente, Bussysteme und/oder Aktoren (Jalousiesteuerung usw.). Günstigerweise kann das Empfangs- und Auswertesystem mehrere Sensorsysteme überwachen.

Auch wird die Aufgabe gelöst durch die Verwendung des Sensorsystems und/oder des Überwachungssystems zur Positionsbestimmung, z. B. von Fenstern, Türen und anderen beweglichen Einrichtungen in Gebäuden. Diese Verwendung erhält zunehmende Bedeutung aus Gründen der Sicherheit, Energieersparnis und zur Erhöhung des Komforts in Zweckbauten, aber auch im privaten Wohnbereich. Dabei ist es vorteilhaft, wenn der Sensor auch als Spannungsgenerator einsetzbar ist, insbesondere wenn er ein induktives oder piezoelektrisches Element enthält. Es sind allgemein auch andere Elemente, beispielsweise e-lektrostriktive oder magnetostriktive Elemente, denkbar.

Auch wird die Aufgabe gelöst durch die Verwendung des Sensorsystems und/oder des Überwachungssystems zur Beleuchtungsmeldung, wobei der Spannungsgenerator und der Sensor insbesondere mindestens teilweise die gleiche Solarzelle beinhalten; dann dient die Solarzelle als kombinierter Spannungsgenerator und Beleuchtungssensor. Die Beleuchtungsstärke an Arbeitsplätzen, in Zweckbauten, im Privathaushalt, in öffentlichen Straßen, Plätzen, Anlagen usw. wird in zunehmendem Maße in Abhängigkeit vom Tagelichteinfall geregelt, um einerseits eine optimale Beleuchtungsqualität zu erreichen und um andererseits Energie zu sparen. Mit der Erkennung kann zum Beispiel die Beleuchtung im Außenbereich oder in Gebäuden eingeschaltet werden.

In den folgenden Ausführungsbeispielen wird schematisch das Sensor- bzw. das Überwachungssystem näher erläutert.

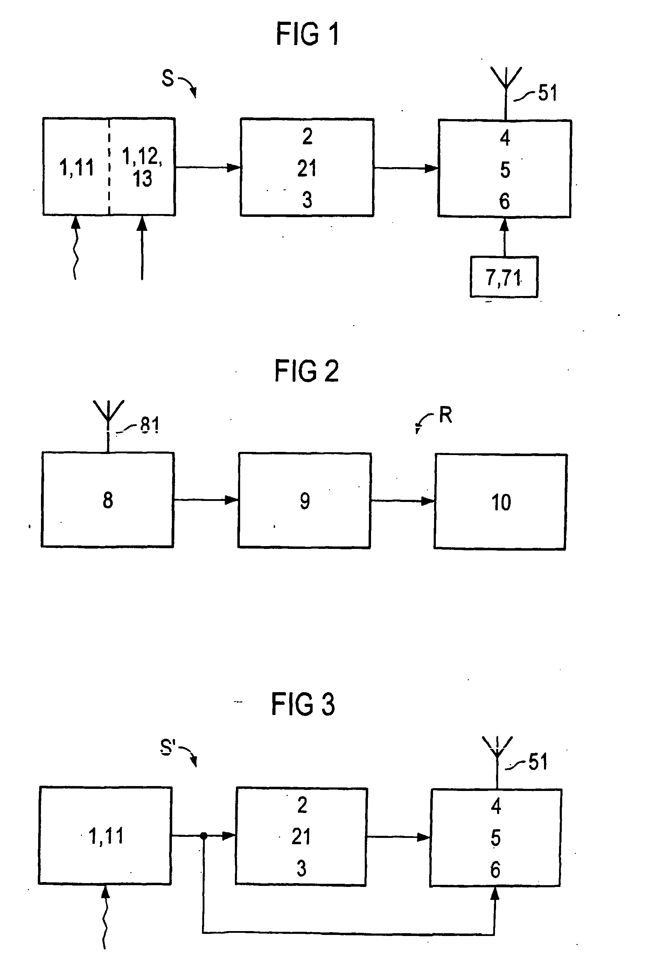

Figur 1 zeigt ein Sensorsystem für einen Positionsmelder, Figur 2 zeigt das zugehörige Empfangs- und Auswertesystem, Figur 3 zeigt ein Sensorsystem für einen Beleuchtungsmelder.

Figur 1 zeigt ein Blockschaltbild eines Sensorsystems S zur Positionsbestimmung.

Das drahtlose Sensorssystem S gibt Informationen über Funk an typischerweise stromnetzgebundene Aktoren, Bussysteme oder Anzeigeelemente weiter. Die Energie zum Betreiben des Sensorsystems S mit zugehörigem Funksender 5 wird aus dem Umgebungslicht und/oder aus der mechanischen Bewegung der zu überwachenden Einrichtungen geliefert, so dass keine Batterie zum Betrieb erforderlich ist.

Ein Spannungsgenerator 1 in Form einer Solarzelle 11 (allg.: eines photovoltaischen Elements) erzeugt bei Lichteinfall eine elektrische Spannung. Diese ist so ausgelegt, dass auch bei kleinen Beleuchtungsstärken schon eine Spannung von etwa 2 Volt abgegeben wird. Die Solarzelle 11 wird aus Kostengründen vorzugsweise so klein gewählt, dass die Prozessorsteuerung 4 damit nicht direkt im Dauerbetrieb betreibbar ist. Dies ist z. B. möglich, wenn die geringe Sendehäufigkeit des Sensorsystems S die beispielsweise pro Tag zum Betrieb erforderliche Energie stark herabsetzt. Um dennoch eine möglichst hohe Leistung zu erhalten, wird zunächst ein Energiespeicher 2, vorzugsweise ein verlustarmer Kondensator hoher Kapazität oder eine elektrochemische Speicherzelle, mit elektrischer Energie aufgeladen. Die Dimensionierung wird dabei zusammen mit der Solarzelle 11 so gewählt, dass auch extreme Dunkelphasen, wie sie beispielsweise im Winter auftreten können, sicher überbrückt werden können.

Weiterhin kommen in diesem Ausführungsbeispiel zusätzlich ein oder mehrere Energiewandler 2 zum Einsatz kommen, welche die Bewegungsenergie (dicker Pfeil) der zu überwachenden Einrichtung (z.B. Drücken von Türklinken, Öffnen oder Schließen von Fenstern oder Türen) zur Speisung des Sensorsystems S in elektrische Energie umwandeln. Insbesondere piezoelektrische Wandler 12, induktive Wandler 13 und als deren Spezialfall ein sogenanntes Wiegand-Element kommen dafür in Betracht.

Erreicht die Spannung am Energiespeicher 2 ein ausreichendes Niveau, so wird eine Timerschaltung 6 aktiviert, welche nun in sinnvollen Abständen das gesamte Sensorsystem S mit Prozessorsteuerung 4 und Sender 5 aktiviert. Der Zeitabstand wird entweder durch die Konstruktion der Timerschaltung 6 fest vorgegeben oder bei jeder Aktivierung durch die Prozessorsteuerung 4 neu festgelegt. Dazu kann insbesondere der Ladezustand des Energiespeichers 2 abgefragt werden und in die Festlegung der Sendehäufigkeit pro Zeiteinheit einfließen, um möglichst lange Betriebsdauern des Sensorsystems S in Dunkelphasen zu ermöglichen. Ein Spannungswandler 3 stellt die für den Betrieb von Prozessorsteuerung 4 und günstigerweise auch des Senders 5 notwendige annähernd konstante Spannung während der jeweiligen kurzen Betriebsphasen bereit.

Bei jeder Aktivierung wird der aktuelle Zustand der überwachten Einrichtung mittels eines Sensors 7 gemessen. Die Messung kann zum Beispiel eine binäre Information liefern (Tür auf oder zu usw.) oder aber einen oder mehrere analoge Messwerte (Öffnungswinkel des Fensters usw.). Das Ergebnis wird zusammen mit einer Identnummer des Sensorsystems S in ein Funk-Sendetelegramm kodiert, welches vom Hochfrequenzsender 5 über die angeschlossene Antenne 51 abgestrahlt wird. Das Funk-Sendetelegramm kann zur Erhöhung der Übertragungssicherheit redundant aufgebaut sein. Statt einer Funkübertragung können auch andere drahtlose Übertragungsarten verwendet werden, z. B. mittels IR-Licht.

Es wird ebenfalls bevorzugt, wenn eine Speicherschaltung 21 vorhanden ist, welche ein Energiemanagement durchführen kann.

Die Timerschaltung 6 wird günstigerweise auf extrem geringen Energiebedarf ausgelegt, da sie als einzige Komponente ständig arbeitet. Zum Einsatz kommt entweder eine analoge oder eine digitale Timerschaltung 6.

Als Positionsgeber 71 können alle vom Prozessor z.B. über einen A/D-Wandler-Baustein abfragbaren Sensoren 7 eingesetzt werden. Für eine binäre Positionsbestimmung sind dies vorzugsweise Reed-Kontakte, die auf ein Magnetfeld eines mit dem bewegten Teil verbundenen Permanentmagneten ansprechen. Für analoge Positionsbestimmungen sind zum Beispiel induktive oder Drehwinkelsensoren geeignet.

Der Sender 5 umfasst bevorzugt im wesentlichen eine Sendestufe mit einem Hochfrequenzoszillator, der sehr schnell anschwingen kann. Vorzugsweise arbeitet er mit einem OFW-Resonator als frequenzbestimmendem Bauteil. Der Sender 5 ist auf sehr geringen Stromverbrauch ausgelegt und arbeitet mit einer vergleichsweise hohen Bandbreite, um die Sendedauer klein zu halten. Die hohe Bandbreite ermöglicht sehr kleine Sendezeiten und damit einen geringen Energieverbrauch.

Figur 2 zeigt ein Blockschaltbild des zugehörigen Empfangs- und Auswertesystems R.

Das Empfangssystem besteht aus einem Hochfrequenzempfänger 8 und einer prozessorbasierten Signalverarbeitungseinheit 9. Es empfängt die vom Sensor ausgesandten Telegramme, die zwischengespeichert und verarbeitet werden.

Das Funksignal des Sensorsystems wird typischerweise von allen in der Nähe befindlichen zugeordneten Hochfrequenzempfängern 8 über deren Antennen 81 empfangen und prozessorgestützt ausgewertet. Nach der Auswertung reagieren nur die adressierten Empfängersysteme und veranlassen über eine geeignete Ankoppelung 10 eine Aktion der Alarmgeber, steuern einen Aktor an (z.B. Heizungsventile bei geöffnetem Fenster) oder speisen die Messdaten in ein Bussystem, z. B. einen PLC-Bus, zur weiteren Speicherung und Verarbeitung.

Bei der Datenübertragung kommen bevorzugt fehlertolerante Übertragungsverfahren zum Einsatz, insbesondere solche mit Forward-Error-Correction oder blockorientierte Redundanzverfahren. Günstig ist eine Möglichkeit der Datenverschlüsselung. Zum Kollisionsschutz bei mehreren Sensoren im Empfangsbereich einer Empfangselektronik ist eine Übertragung der Daten in sehr kurzer Zeit vorteilhaft. Übertragen werden z. B. ein Positionskennwert, Identnummer und eventuell weiteren Daten wie Zeit u.ä.

Die Datenübertragung findet in festen oder variablen Zeitabständen auch ohne eine Bewegung der überwachten Einrichtungen statt, kann jedoch auch jeweils durch eine Zustandsänderung dieser Einrichtungen ausgelöst werden.

Figur 3 zeigt ein Blockschaltbild eines Beleuchtungssensorsystems.

Die Beleuchtungsstärke an Arbeitsplätzen, in Zweckbauten, im Privathaushalt, in öffentlichen Straßen, Plätzen, Anlagen usw. wird in zunehmendem Maße in Abhängigkeit vom Tagelichteinfall geregelt, um einerseits eine optimale Beleuchtungsqualität zu erreichen und um andererseits Energie zu sparen.

Im Gegensatz zum Sensorsystem aus Figur 1 ist hier kein mechanischer aktivierter Spannungsgenerator 12,13 vorhanden. Vielmehr dient ausschließlich die Solarzelle 11 als Spannungsgenerator 1 und Sensor 7. Bei jeder Aktivierung wird die aktuelle Beleuchtungsstärke über die Solarzelle 11 gemessen. Das Ergebnis wird zusammen mit der Identnummer des Sensors 11 in ein Funktelegramm kodiert, welches vom Hochfrequenzsender 5 über die angeschlossene Antenne 51 abgestrahlt wird. Das Funktelegramm kann zur Erhöhung der Übertragungssicherheit redundant aufgebaut sein.

## Patentansprüche

1. Sensorsystem (S,S'), aufweisend,
- mindestens einen Spannungsgenerator (1,11,12,13) zur Umwandlung nichtelektrischer Energie in elektrische Energie,
- mindestens einen dem Spannungsgenerator (1,11,12,13) nachgeschalteten Energiespeicher (2),
- mindestens einen Spannungswandler (3), der so an den Energiespeicher (2) angeschlossen ist, dass sein Ausgangssignal zum Betrieb einer Prozessorsteuerung (4) geeignet ist,
- mindestens einen Sensor (7,71),
- mindestens einen Sender (5) zur drahtlosen Aussendung von Sendetelegrammen, welche von der Prozessorsteuerung (4) erzeugbar sind, und welche mindestens einen Messwert des mindestens einen Sensors (7,71) enthalten,
**dadurch gekennzeichnet, dass**
- eine Timerschaltung (6) vorhanden ist, die in Abhängigkeit von einem Spannungsniveau des mindestens einen Energiespeichers (2) triggerbar ist und die nach einem bestimmten Zeitabstand das Sensorsystem (S) zur Aussendung mindestens eines Sendetelegramms aktiviert.

2. Sensorsystem (S,S') nach Anspruch 1, bei dem mindestens ein Spannungsgenerator (1) eine Solarzelle (11) ist.

3. Sensorsystem (S,S') nach einem der Ansprüche 1 oder 2, bei dem mindestens ein Spannungsgenerator (1) ein piezoelektrischer Wandler (12) und / oder induktiver Wandler (13) ist.

4. Sensorsystem (S,S') nach einem der vorhergehenden Ansprüche, bei dem die Timerschaltung (6) mit Halbleiterbausteinen in ULP-Technik aufgebaut ist.

5. Sensorsystem (S, S') nach einem der vorhergehenden Ansprüche, bei dem das Sendetelegramm zusätzlich mindestens einen Identcode enthält.

6. Sensorsystem (S,S') nach einem der vorhergehenden Ansprüche, bei dem der Zeitabstand variabel einstellbar ist, insbesondere mittels der Timerschaltung (6).

7. Sensorsystem (S,S') nach einem der vorhergehenden Ansprüche, bei dem der Sensor (7,71) ein Teil des Spannungsgenerators (1,11,12,13) ist.

8. Überwachungssystem, mit mindestens einem Sensorsystem (S, S') nach einem der Patentansprüche 1 bis 7 und mindestens einem Empfangs- und Auswertesystem (R).

9. Verwendung des Sensorsystems (S,S') nach einem der Patentansprüche 1 bis 7 zur Positionsbestimmung oder zur Bestimmung einer Beleuchtungsstärke.

10. Verfahren zur Einstellung des Zeitabstands eines Sensorsystems (S,S') nach einem der Ansprüche 1 bis 7, bei dem ein Ladezustand des Energiespeichers (2) abgefragt wird und in die Festlegung der Sendehäufigkeit pro Zeiteinheit einfließt.

## Claims

1. Sensor system (S, S') having
- a least one voltage generator (1, 11, 12, 13) for conversion of non-electrical energy to electrical energy,
- at least one energy store (2) which is connected downstream from the voltage generator (1, 11, 12, 13),
- at least one voltage converter (3) which is connected to the energy store (2) such that its output signal is suitable for operation of a processor controller (4),
- at least one sensor (7, 71),
- at least one transmitter (5) for wire-free transmission of transmission messages which can be produced by the processor controller (4) and which contain at least one measured value from the at least one sensor (7, 71),
**characterized in that**
- a timer circuit (6) is provided, which can be triggered as a function of a voltage level of the at least one energy store (2), and which activates the sensor system (S) in order to transmit at least one transmission message after a specific time interval.

2. Sensor system (S, S') according to Claim 1, in which at least one voltage generator (1) is a solar cell (11).

3. Sensor system (S, S') according to one of Claims 1 or 2, in which the at least one voltage generator (1) is a piezoelectric transducer (12), and/or an inductive converter (13).

4. Sensor system (S, S') according to one of the preceding claims, in which the timer circuit (6) has semiconductor modules based on ULP technology.

5. Sensor system (S, S') according to one of the preceding claims, in which the transmission message also contains at least one identification code.

6. Sensor system (S, S') according to one of the preceding claims, in which the time interval can be set variably, in particular by means of the timer circuit (6) .

7. Sensor system (S, S') according to one of the preceding claims, in which the sensor (7, 71) is a part of the voltage generator (1, 11, 12, 13).

8. Monitoring system having at least one sensor system (S, S') according to one of Patent Claims 1 to 7 and at least one receiving and evaluation system (R).

9. Use of the sensor system (S, S') according to one of Patent Claims 1 to 7 for position finding or for determination of an illumination intensity.

10. Method for setting the time interval for a sensor system (S, S') according to one of Claims 1 to 7, in which a state of charge of the energy store (2) is checked and is included in the definition of the transmission frequency per unit time.

## Revendications

1. Système de détection (S, S') qui comporte
- au moins un générateur de tension (1, 11, 12, 13) permettant de convertir de l'énergie non électrique en énergie électrique,
- au moins un réservoir d'énergie (2), monté en aval du générateur de tension (1, 11, 12, 13),
- au moins un convertisseur de tension (3), qui est raccordé au réservoir d'énergie (2) de sorte que son signal de sortie est approprié pour faire fonctionner une commande à processeur (4),
- au moins un capteur (7, 71),
- au moins un émetteur (5) permettant d'envoyer sans fil des télégrammes d'émission, qui peuvent être produits par la commande (4) à processeur, et qui contiennent au moins une valeur de mesure du au moins un capteur (7, 71),
**caractérisé en ce que**
- il est prévu un circuit (6) de synchronisation, qui peut être déclenché en fonction d'un niveau de tension du au moins un réservoir (2) d'énergie et qui active le système de détection (S) au bout d'un laps de temps déterminé afin d'émettre au moins un télégramme d'émission.

2. Système de détection (S, S') selon la revendication 1, dans lequel au moins un générateur de tension (1) est une pile solaire (11).

3. Système de détection (S, S') selon l'une des revendications 1 ou 2, dans lequel au moins un générateur (1) de tension est un convertisseur piézo-électrique (12) et/ou un convertisseur inductif (13).

4. Système de détection (S, S') selon l'une des revendications précédentes, dans lequel le circuit de synchronisation (6) est élaboré avec des composants à semiconducteurs de la technique ULP.

5. Système de détection (S, S') selon l'une des revendications précédentes, dans lequel le télégramme d'émission contient en plus au moins un code d'identification.

6. Système de détection (S, S') selon l'une des revendications précédentes, dans lequel le laps de temps peut être réglé de façon variable, notamment au moyen du circuit de synchronisation (6).

7. Système de détection (S, S') selon l'une des revendications précédentes, dans lequel le capteur (7, 71) fait partie du générateur de tension (1, 11, 12, 13).

8. Système de contrôle comportant au moins un système de détection (S, S') selon l'une des revendications 1 à 7 et au moins un système de réception et d'exploitation (R).

9. Utilisation du système de détection (S, S') selon l'une des revendications 1 à 7 pour la détermination d'une position ou la détermination d'une intensité d'éclairage.

10. Procédé de réglage du laps de temps d'un système de détection (S, S') selon l'une des revendications 1 à 7, dans lequel un état de charge du réservoir d'énergie (2) est interrogé et intervient dans la détermination de la fréquence d'émission par unité de temps.
